# EUROPEAN PATENT APPLICATION

(11) **EP 4 435 960 A1**
(43) Date of publication of application: **25.09.2024**
(21) Application number: 23883084.8
(22) Date of filing: 25.10.2023
(51) Int. Cl.: H01M 50/557, H01M 50/55, H01M 50/567, H01M 50/588, H01M 50/103

(54) **SECONDARY BATTERY HAVING IMPROVED TERMINAL STRUCTURE**

(30) Priority: 28.10.2022 KR 20220141685
(71) Applicant: LG Energy Solution, Ltd., Seoul 07335 (KR)
(72) Inventor: BOK, Cheon Hee, Daejeon 34122 (KR); SUNG, Joo Hwan, Daejeon 34122 (KR); KIM, Jun Min, Daejeon 34122 (KR); JEON, Dan Bi, Daejeon 34122 (KR); CHOI, Kyoung Min, Daejeon 34122 (KR); HONG, Ji Su, Daejeon 34122 (KR)
(74) Representative: Goddar, Heinz J.
(86) International application number: PCT/KR2023/016618
(87) International publication number: WO 2024/090979

(57) **Abstract**

A secondary battery includes positive and negative electrode terminals spaced apart on a first face of a hexahedral-shaped battery case, a nonlinear terminal body contacting the first face of the battery case and a side of the battery case extending from the first face of the battery case while enclosing one of the positive or negative electrode terminals, a terminal structure including an extension terminal electrically connected to the one of the positive or negative electrode terminals, and the extension terminal exposed on a side of the terminal structure, wherein the side of the terminal structure is seated in a recessed surface formed in the side of the battery case.

## Description

### Cross-Reference to Related Applications

This application claims the benefit of priority based on Korean Patent Application No. 10-2022-0141685, filed on October 28, 2022, and the entire contents of the Korean patent application are incorporated herein by reference.

### Technical Field

The present invention relates to a secondary battery, and more particularly to a prismatic secondary battery having an improved terminal structure in which the arrangement structure of the positive and/or negative electrode terminals can be easily and reliably varied.

### Background Art

Unlike primary batteries, secondary batteries can be recharged and have been researched and developed in recent years due to their potential for miniaturization and large capacity. The demand for the secondary battery as an energy source is increasing rapidly due to the technological development and increasing demand for mobile devices, electric vehicles, and energy storage systems, which are emerging in response to the need for environmental protection.

Secondary batteries are categorized into coin batteries, cylindrical batteries, prismatic batteries, and pouch batteries based on the shape of the battery case. In the secondary battery, the electrode assembly mounted inside the battery case is a charging and discharging power generation element consisting of a stacked structure of electrodes and separators.

Electrode assemblies can be broadly categorized into (1) Jellyroll type, which is wound with a separator between the positive and negative electrodes of an active material-coated sheet, (2) Stack type, in which a plurality of positive and negative electrodes is sequentially stacked with an interposed separator, and (3) Stack & Folding type, in which stacked unit cells are wound with a long length of separator film.

Among the various types of secondary batteries, prismatic secondary batteries are mostly composed of positive and negative electrode terminals arranged together on one side, or one on each of the two opposing sides. The arrangement of the positive and negative electrode terminals is determined by the design specifications of various devices containing prismatic secondary batteries, and it is difficult to design the arrangement structure of the positive and negative electrode terminals separately in the same form factor according to these design specifications.

### Disclosure

### Technical Problem

The present invention is directed to providing a new prismatic secondary battery in which the arrangement structure of the positive and negative electrode terminals provided in the prismatic secondary battery can be easily changed and manufactured without any design changes.

In addition, the present invention has another objective to provide a prismatic secondary battery that can stably maintain the changed arrangement even after the arrangement structure of the positive and negative electrode terminals is changed.

However, the technical problem to be solved by the present invention is not limited to the above-described problem, and other problems not mentioned can be clearly understood by a person skilled in the art from the description of the invention described below.

### Technical Solution

A secondary battery according to the invention, in one example, including a secondary battery having positive and negative electrode terminals spaced apart on a upper face of a battery case having a hexahedral shape, and a terminal body in the form of a bend engaging an upper face of the battery case and a side extending from the upper face of the battery case while enclosing the positive or negative electrode terminals from being exposed, a terminal structure including an extension terminal electrically connected to the positive or negative electrode terminals and exposed on a side of the terminal structure, the side of the terminal structure seated in a concave surface formed in a side of the battery case.

In one embodiment of the invention, the terminal body is made of an insulating material, whereby the positive or negative electrode is electrically isolated from the outside.

Further, the concave surface is formed in a shape corresponding to a side of the terminal structure, and the side edges of the terminal structure are supported in contact with the stepped edges of the concave surface.

Furthermore, the side edges of the terminal structure and the edges of the concave surface may be interconnected by a dovetail structure.

Accordingly, the sides of the terminal structure may be slidably engaged with respect to the concave surface.

On the other hand, according to another embodiment of the present invention, opposite front and rear faces of the battery case may each be formed with concave beading parts, and upper face edges of the terminal structure may be provided with protrusions inserted into the beading parts.

A side edge of the terminal structure contacts a stepped edge of the concave surface, while at the same time a protrusion of the terminal structure is inserted into the beading part, whereby the terminal structure is supported against the battery case.

In addition, the protrusions of the terminal structure may slidably engage and interlock with each other with respect to the beading part.

Further, the beading parts may press against the surface of the electrode assembly housed within the battery case.

The beading part may be formed at a location spaced apart from the electrode tabs of the electrode assembly housed inside the battery case, such as adjacent to the cap plate to press against the top of the electrode assembly housed inside the battery case.

### Advantageous Effects

According to the secondary battery of the present invention, by applying a terminal structure with a simple structure, it is possible to easily change the terminal arrangement from a unidirectional secondary battery to a bidirectional secondary battery, and the support structure of the terminal structure is strengthened to prevent problems such as breakage of the terminal structure bonded to the battery case and welding deterioration due to vibration during automobile operation.

In addition, the concave beading parts formed on the front and rear surfaces of the battery case to limit the degree of freedom of the terminal structure can compress and support the surface of the electrode assembly housed inside, thereby improving the support structure of the electrode assembly, and thus greatly improving the safety of the secondary battery.

However, the technical effects that can be obtained through the present invention is not limited to the above-described effects, and other effects not mentioned can be clearly understood by a person skilled in the art from the description of the invention described below.

### Brief Description of the Drawings

Because the following drawings attached to the present specification illustrate exemplary embodiments of the present invention and serve to facilitate understanding of the technical idea of the present invention together with the detailed description of the invention described below, the present invention should not be limitedly interpreted on the basis of the drawings.
FIG. 1 is a perspective view illustrating a secondary battery according to the present invention.
FIG. 2 is a perspective view illustrating the combined structure of a secondary battery and terminal structure according to the present invention.
FIG. 3 is a diagram illustrating an embodiment in which the concave surface of the battery case and the terminal structure are coupled in a dovetail structure.
FIG. 4 is a cross-sectional view along line "A-A" in FIG. 3.
FIG. 5 is a perspective view illustrating a secondary battery according to another embodiment of the present invention.
FIG. 6 is a perspective view illustrating the combined structure of the secondary battery and terminal structure according to the embodiment of FIG. 5.
FIG. 7 is a cross-sectional view along line "B-B" in FIG. 5.
FIG. 8 is a front view of the secondary battery of FIG. 5.

### Best Mode

The present invention may have various modifications and various embodiments, and thus specific embodiments thereof will be described in detail below.

However, it should be understood that the present invention is not limited to the specific embodiments, and includes all modifications, equivalents, or alternatives within the spirit and technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

A secondary battery according to the present invention, wherein the positive and negative electrode terminals are spaced apart on an upper face of a battery case having a hexahedral shape, the secondary battery including a terminal body in the form of a bend that engages the upper face of the battery case and a side surface extending from the upper face of the battery case while enclosing the positive or negative electrode terminals from being exposed, and a terminal structure including an extension terminal electrically connected to the positive or negative electrode terminals and exposed on a side surface of the terminal body.

Further, a side of the terminal structure is received in a concave surface formed in a side of the battery case.

Accordingly, the secondary battery of the present invention including the terminal structure can freely change the positions of the positive and negative electrode terminals arranged on the upper face of the battery case to match the user's needs without any design changes by simply applying the terminal structure, and thereby reduce the production cost of prismatic secondary batteries by eliminating the need to design a unidirectional secondary battery into a bidirectional secondary battery.

In addition, the prismatic secondary battery of the present invention has a limited degree of freedom of movement as the terminal structure is supported by being seated in a concave surface formed in the battery case, thereby preventing problems such as breakage of the terminal structure bonded to the battery case or welding deterioration due to vibration during automobile operation.

### Mode for Invention

Hereinafter, specific embodiments of a secondary battery of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

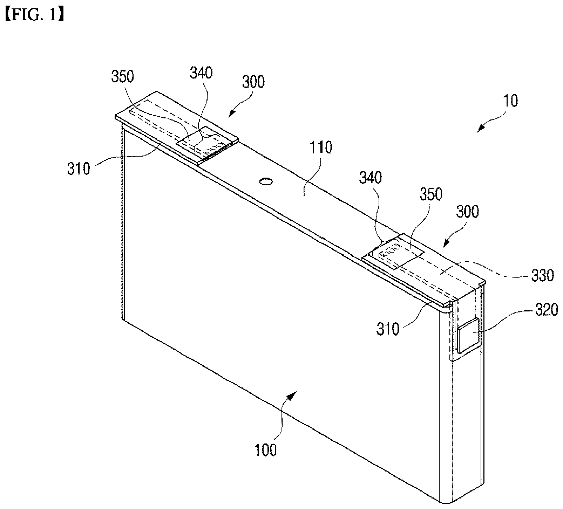

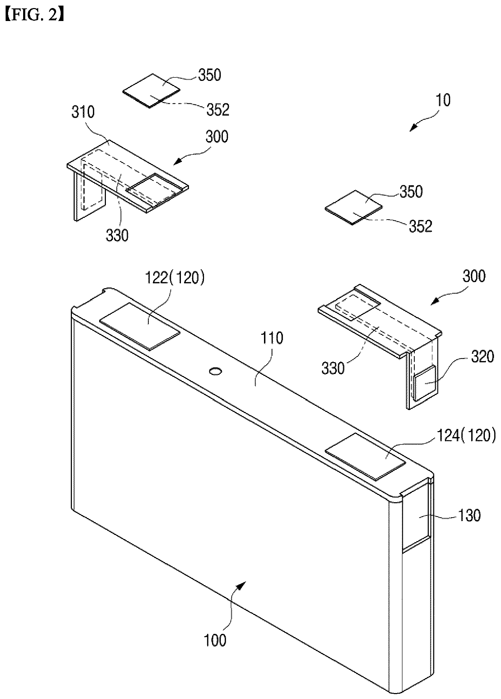

FIG. 1 is a perspective view of a secondary battery 10 according to the present invention, and FIG. 2 is a perspective view of a coupling structure of a secondary battery 10 and a terminal structure 300 according to the present invention.

Referring to FIG. 1 and FIG. 2, the present invention relates to a secondary battery 10, and in particular to a unidirectional, prismatic secondary battery 10 having a pair of terminals, namely a positive electrode terminal 122 and a negative electrode terminal 124, spaced apart on the upper face of a battery case 100 having a hexahedral shape. Here, the prismatic secondary battery 10 shown in the drawings is an example, and the ratio of width to length and height may vary, and for ease of explanation, the orientation of the front and rear and up and down and left and right will be referred to with reference to the attached drawings. For example, one side of the battery case 100 on which the positive electrode terminal 122 and the negative electrode terminal 124 are disposed is called the upper face, and the opposite side facing it is called the lower surface.

The secondary battery 10 of the present invention includes a terminal structure 300. The terminal structure 300 is a right-angled, bent structure that couples to at least one of the upper face edges of the battery case 100, and it includes a terminal body 310 and an extension terminal 320.

Terminal body 310 refers to a body of the terminal structure 300 that couples to the upper face of the battery case 100 and a side extending from the upper face while enclosing the positive electrode terminal 122 or the negative electrode terminal 124 from being exposed to the outside. Although the drawings illustrate an example where the terminal structure 300 is coupled to both the positive electrode terminal 122 and the negative electrode terminal 124, depending on the embodiment, the terminal structure 300 may optionally be coupled to only one of the positive electrode terminal 122 and the negative electrode terminal 124.

The extension terminal 320 corresponds to a connection terminal that is electrically connected to the positive electrode terminal 122 or the negative electrode terminal 124 and extends to the side of the terminal body 310. In other words, since the positive electrode terminal 122 or the negative electrode terminal 124 is not exposed and is enclosed by the terminal body 310, the extension terminal 320 functions as a new positive electrode terminal or negative electrode terminal relocated to the side of the battery case 100 rather than the upper face.

Furthermore, the terminal body 310 is made of an insulating material, such as an electrically insulating resin or rubber material, thus the positive electrode terminal 122 or negative electrode terminal 124 covered by the terminal body is in an inactive state, electrically isolated from the outside environment. In other words, in the secondary battery 10 to which the terminal structure 300 is coupled, the existing positive electrode terminal 122 or negative electrode terminal 124 no longer functions as a connection terminal, and the extension terminal 320 on the terminal structure 300 functions as a new positive electrode terminal or negative electrode terminal.

Accordingly, the secondary battery 10 of the present invention can freely change the position of the positive electrode terminal 122 and the negative electrode terminal 124, which are disposed together on the upper face of the battery case 100, and the arrangement structure of the electrode terminal 120 without any design change by simply applying the terminal structure 300. Therefore, the present invention can easily change the position of the positive electrode terminal 122 and/or the negative electrode terminal 124 by adding the terminal structure 300 for a secondary battery of the same form factor, thereby reducing the production cost of various prismatic secondary batteries.

In one embodiment of the present invention, the positive electrode terminal 122 and/or the negative electrode terminal 124 are electrically connected to an extension wire 330 via an extension terminal 320, wherein the extension wire 330 extending to the extension terminal 320 forms a joint part 340 with respect to the positive electrode terminal 122 and/or the negative electrode terminal 124, wherein the joint part 340 provides a mechanically and electrically rigid connection between the extension wire 330 and the electrode terminal 120. For example, the joint part 340 may be formed by welding.

The extension wire 330 is not exposed to the outside of the terminal body 310. For example, the extension wire 330 may be embedded in the terminal body 310 of an electrically insulating resin material by manufacturing techniques such as insert molding. The joint part 340 is also electrically insulated from the outside. The external insulation of the joint part 340 may be provided by at least one of an insulating cover, an insulating tape, and a curable insulating layer.

A curable insulating layer here refers to an insulating layer formed by curing after a flowable insulating resin is applied to the joint part 340, and FIG. 1 and FIG. 2 show a configuration in which a film-like insulating tape 350 having an adhesive layer 352 insulates the joint part 340.

Basically, the terminal structure 300 is secured to the positive electrode terminal 122 and the negative electrode terminal 124 by a joint part 340 formed by welding, and since the terminal structure 300 secured by the joint part 340 has many structural degrees of freedom, the terminal structure 300 may have problems if the secondary battery 10 of the present invention is subjected to continuous vibration. For example, if the secondary battery 10 of the present invention is applied to an electric automobile and placed in an environment subject to constant vibration, problems such as breakage of the terminal structure 300 bonded to the battery case 100 or weld degradation at the joint part 340 may occur.

The secondary battery 10 of the present invention is configured to form a concave or recessed surface 130 on a side of the battery case 100 to improve the support structure of the terminal structure 300, and the side of the terminal structure 300 is configured to be seated in the concave surface 130.

Specifically, referring to FIG. 1 and FIG. 2, the concave surface 130 formed on the side of the battery case 100 has a shape corresponding to the side of the terminal structure 300. Accordingly, when the sides of the terminal structure 300 are seated within the concave surface 130, the side edges of the terminal structure 300 are supported by contacting the stepped edges of the concave surface 130. The stepped edges may also be referred to as the lips formed by the recessed surface and surrounding the surface.

This additional support structure of the terminal structure 300 by the concave surface 130 limits the forward and backward degrees of freedom of the terminal structure 300, based on the drawings. In the absence of the concave surface 130, the joint part 340 would have to bear all of the disturbances acting on the terminal structure 300, but the limited degrees of freedom provided by the concave surface 130 reduces the degrees of freedom of the terminal structure 300 that the joint part 340 must bear, thereby greatly reducing the possibility of problems such as welding degradation at the joint part 340 and improving the vibration resistance of the terminal structure 300 attached to the battery case 100.

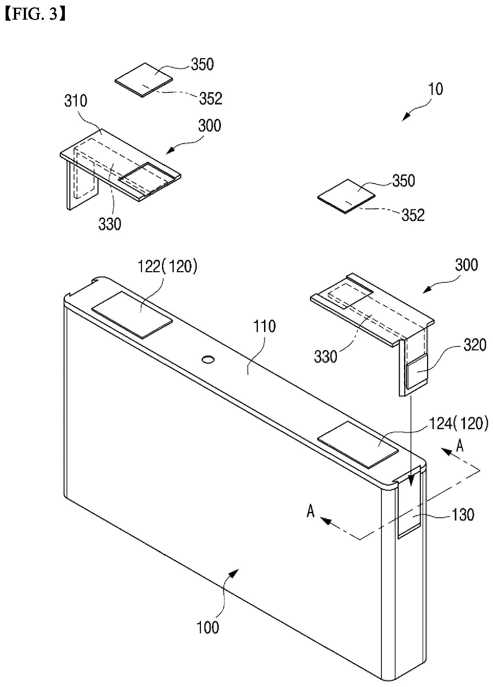

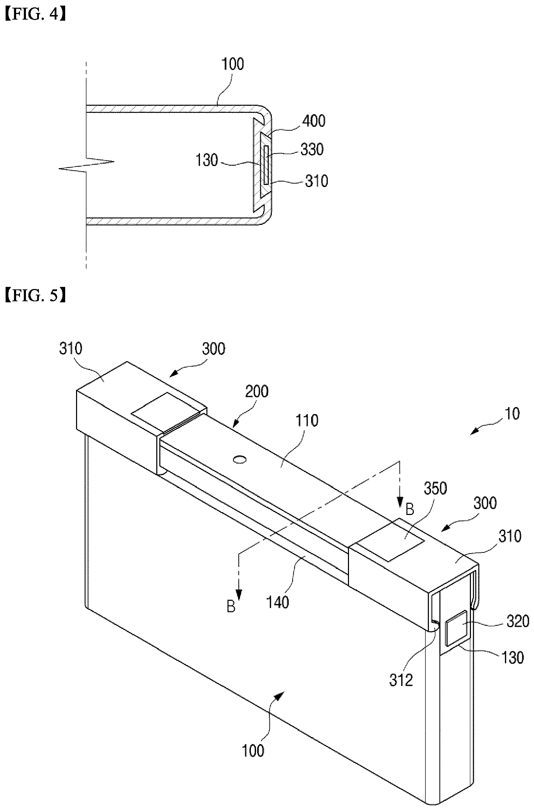

FIG. 3 and FIG. 4 illustrate a modified embodiment of a support structure between the concave surface 130 of the battery case 100 and the terminal structure 300. Referring to the figures, the side edges of the terminal structure 300 and the edges of the concave surface 130 are interconnected by a dovetail 400 structure. The dovetail 400 structure refers to a structure in which two members are interlocked by the corners of a non-equilateral square and are strongly bound together to prevent them from falling apart in a particular direction.

As shown in FIG. 3 and FIG. 4, the concave surface 130 on the side of the battery case 100 has a sloping surface with a greater width at the bottom in a vertical cross-section of the concave surface 130, and the sides of the terminal structure 300 are correspondingly shaped in a complementary manner (in the form of a sloping surface opposite to the sloping direction of the concave surface 130). Accordingly, the sides of the terminal structure 300 are slidingly coupled to each other along the height direction of the battery case 100 with respect to the concave surface 130.

When the side edges of the terminal structure 300 and the edges of the concave surface 130 are interconnected by the dovetail 400 structure, the degrees of freedom of the terminal structure 300 are further restricted. In other words, the terminal structure 300 can slidably move in only one direction, the height direction, with respect to the battery case 100, which further reduces the load that the joint part 340 must bear, further improving the support structure of the terminal structure 300.

### [second embodiment]

FIG. 5 is a drawing illustrating a secondary battery 10 according to a second embodiment of the present invention, wherein concave (or recessed) beading parts 140 are formed on opposite front and rear surfaces of the battery case 100, respectively. Furthermore, corresponding to the beading parts 140 formed on the front and rear surfaces of the battery case 100, the upper face corners of the terminal structure 300 are provided with protrusions 312 that are inserted into the beading parts 140.

According to this second embodiment, the side edges of the terminal structure 300 contact the stepped edges of the concave surface 130 while the upper face edge protrusions 312 of the terminal structure 300 are inserted into the beading part 140, thus ensuring that the terminal structure 300 is doubly supported against the battery case 100.

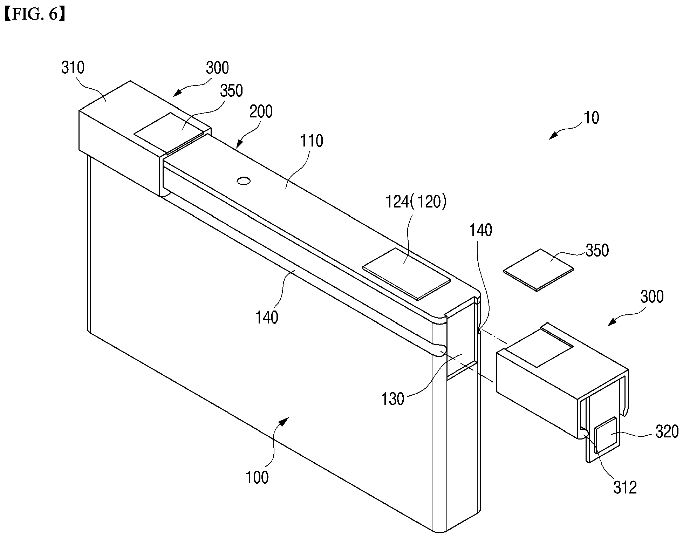

Compared to the dovetail 400 structure of the first embodiment described above, the terminal structure 300 is similar in that the degrees of freedom of the terminal structure 300are limited in two directions, the difference being that the direction in which the degrees of freedom of the terminal structure 300 are limited is different from the dovetail 400 structure. In other words, in the second embodiment, the protrusions 312 of the terminal structure 300 are slidingly coupled to each other along the width direction of the battery case 100 with respect to the beading part 140, as shown in FIG. 6, thereby limiting the degree of freedom of the terminal structure 300 from moving along the height direction of the battery case 100 by the coupling of the beading part 140 and the protrusions 312. As a result, the second embodiment further reduces the load that must be bearing by the joint part 340, and thus provides a stronger support structure for the terminal structure 300.

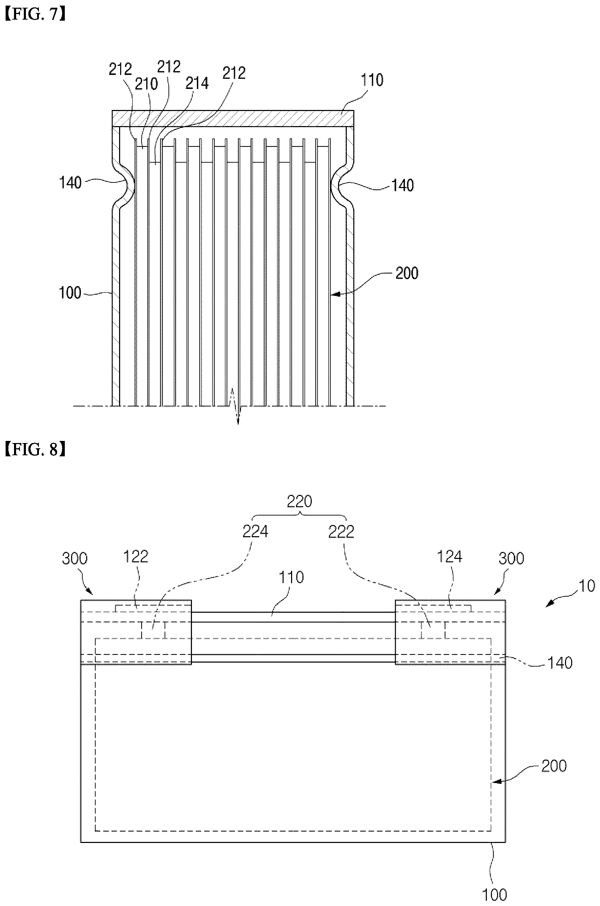

Here, in addition to functioning as a support for the terminal structure 300, the beading parts 140 formed on each of the front and rear surfaces of the battery case 100 may also function as a means of compressing the surface of the electrode assembly 200 housed within the battery case 100, as shown in FIG. 7.

The beading part 140 forms a concave surface 130 in the form of a thin line, and the beading part 140, which forms the concave surface 130 toward the interior of the battery case 100, has a depth that presses against the surface of the electrode assembly 200 housed inside the battery case 100.

Because the beading part 140 is in the form of a thin line, it has a very small effect on the capacity of the prismatic secondary battery 10, even though it forms a concave surface 130 inwardly of the battery case 100. In other words, the beading part 140 has a very limited effect on the capacity or size of the essential components of the prismatic secondary battery 10 that are housed inside the battery case 100, such as the electrode assembly 200 and the electrolyte, etc.

As shown in FIG. 7, beading parts 140 formed along the front and rear perimeter of the cell case 100 compress against the surface of the electrode assembly 200 in both directions. In other words, the electrode assembly 200 having a gap with respect to the battery case 100 is pressed and fixed in both directions by a pair of opposing beading parts 140, thereby improving the support structure of the electrode assembly 200, and thus suppressing the slip phenomenon that causes the electrode assembly 200 to move during use.

As a result, the fluidity of the electrode assembly 200 is restricted by the beading part 140, thereby preventing various problems such as shorts or tabs tearing due to electrical contact caused by slip phenomena, which greatly improves the safety of the prismatic secondary battery 10.

Furthermore, the beading part 140 can compress the surface of the negative electrode 210 of the electrode assembly 200 housed inside the battery case 100. The electrode assembly 200 may be formed with the negative electrode 210 larger than the positive electrode 214 so that the negative electrode 210 surface covers the surface of the positive electrode 214. In other words, the surface of the negative electrode 210 covers the surface of the positive electrode 214 so that the positive electrode 214 is not exposed.

In the electrode assembly 200, forming the negative electrode 210 larger than the positive electrode 214 is advantageous from a safety perspective. This takes into account the N/P ratio, which is the ratio of the capacity of the negative electrode 210 to the positive electrode 214. In a lithium-ion secondary battery using a graphite negative electrode, the capacity of the negative electrode 210 must be larger than the positive electrode 214 to prevent lithium precipitation from the negative electrode 210 during overcharge.

In this regard, it may be desirable to maintain an N/P ratio of approximately 1.12 for the safety of the secondary battery 10, whereby the electrode assembly 200 may be formed with the negative electrode 210 being larger than the positive electrode 214. It is also preferred that the side of the negative electrode 210 that is directly pressed by the beading part 140 across the separator 212 is the negative electrode 210 because of the higher structural stability of the negative electrode compared to the positive electrode.

FIG. 8 is a front view of the prismatic secondary battery 10, wherein the electrode assembly 200 housed within the battery case 100 is represented by a silver line. A beading part 140 presses against the surface of the negative electrode 210, where the beading part 140 is formed at a position spaced apart from the electrode tab 220 of the electrode assembly 200.

As the beading part 140 presses against the surface of the negative electrode 210 of the electrode assembly 200, it may support a cathode active material-coated retaining member, or a cathode non-active material-coated plain member. If the beading part 140 is compressing the cathode plain, it is preferable to perform a notching operation on the cathode plain to support a downward region some distance from the formed negative electrode tab 222. This is because creating stress on the electrode tabs 220 by allowing the beading part 140 to directly compress the electrode tabs 220, particularly the negative electrode tab 222, is likely to damage the electrode tabs 220. Additionally, the beading part 140 may be formed adjacent to the cap plate 110 forming the upper face of the battery case 100 to compress the top of the electrode assembly 200 housed within the battery case 100.

Moreover, because the beading parts 140 are formed on the front and rear sides that have the longest widthwise lengths of the front, rear, and left and right perimeters of the battery case 100, the beading parts 140 are of sufficient length to firmly support the electrode assembly 200. Furthermore, since the support structure of the terminal structure 300 is also improved by the insertion of the protrusions 312 of the terminal structure 300 with respect to the beading part 140, the second embodiment of the present invention significantly improves the structural stability of the prismatic secondary battery 10 by the beading part 140.

As above, the present invention has been described in more detail through the drawings and embodiments. However, since the configuration described in the drawings or embodiments described herein is merely one embodiment of the present invention and do not represent the overall technical spirit of the invention, it should be understood that the invention covers various equivalents, modifications, and substitutions at the time of filing of this application.

### [Description of Reference Numerals]

10: secondary battery
100: battery case
110: cap plate
120: electrode terminal
122: positive electrode terminal
124: negative electrode terminal
130: concave surface
140: beading part
200: electrode structure
210: negative electrode
212: separator
214: positive electrode
220: electrode tab
222: negative electrode tab
224: positive electrode tab
300: terminal structure
310: terminal body
312: protrusion
330: extension wire
340: insulating tape
352: bonding layer
400: dovetail

## Claims

1. A secondary battery comprising:
positive and negative electrode terminals spaced apart on a first face of a hexahedral-shaped battery case; and
a nonlinear terminal body contacting the first face of the battery case and a side of the battery case extending from the first face of the battery case while enclosing one of the positive or negative electrode terminals,
a terminal structure including an extension terminal electrically connected to the one of the positive or negative electrode terminals, the extension terminal exposed on a side of the terminal structure;
wherein the side of the terminal structure is seated in a recessed surface formed in the side of the battery case.

2. The secondary battery of claim 1, wherein the terminal body is formed of an insulating material, whereby the one of the positive or negative electrode terminals is electrically isolated from ambient elements.

3. The secondary battery of claim 1, wherein the recessed surface is formed in a shape corresponding to the side of the terminal structure, and side edges of the terminal structure are supported in contact with stepped edges of the recessed surface.

4. The secondary battery of claim 3, wherein the side edges of the terminal structure and the stepped edges of the recessed surface are coupled by a dovetail structure.

5. The secondary battery of claim 4, wherein the sides of the terminal structure are configured to be be slidably engaged with respect to the recessed surface.

6. The secondary battery of claim 1, wherein opposing second and third faces of the battery case are formed with recessed beading parts, and
edges of the first face of the terminal structure include protrusions configured to be inserted into the beading parts.

7. The secondary battery of claim 6, wherein when a side edge of the terminal structure contacts a stepped edge of the recessed surface, a protrusion of the terminal structure is disposed within the beading part,

8. The secondary battery of claim 7, wherein the protrusion of the terminal structure is configured to slidably engage and interlock with the recessed beading part.

9. The secondary battery of claim 6, wherein the beading parts contact a surface of an electrode assembly housed within the battery case.

10. The secondary battery of claim 9, wherein the beading parts are formed at a location spaced apart from electrode tabs of the electrode assembly housed inside the battery case.

11. The secondary battery of claim 10, wherein the beading parts are adjacent to a cap plate to press against the electrode assembly housed inside the battery case.
